# EUROPÄISCHE PATENTANMELDUNG

(11) **EP 4 242 394 A1**
(43) Veröffentlichungstag der Anmeldung: **13.09.2023**
(21) Anmeldenummer: 23160505.6
(22) Anmeldetag: 07.03.2023
(51) Int. Cl.: E04C 5/07, E04G 23/02, B29C 70/16, B29C 70/54, B29C 70/52, B29C 35/02, B29C 70/56, B29L 31/06

(54) **VERFAHREN ZUR HERSTELLUNG WENIGSTENS EINES TEILGEHÄRTETEN BEWEHRUNGSELEMENTS**

(30) Priorität: 10.03.2022 DE 102022105682
(71) Anmelder: Solidian GmbH, 72458 Albstadt (DE)
(72) Erfinder: Bischoff, Thomas, 72406 bisingen (DE)
(74) Vertreter: Rüger Abel Patentanwälte PartGmbB

(57) **Zusammenfassung**

Die Erfindung betrifft ein Verfahren zur Herstellung wenigstens eines teilgehärteten Bewehrungselements (10). Aus dem teilgehärteten Bewehrungselement (10) kann durch wenigstens einen weiteren Verfahrensschritt wenigstens ein vollständig ausgehärtetes Bewehrungskörperteil (40) hergestellt werden. Zur Herstellung des wenigstens einen teilgehärteten Bewehrungselements (10) wird ein Verstärkungsfaserstrang (13) bereitgestellt und mit einem Imprägniermaterial (11) imprägniert. Das Imprägniermaterial (11) enthält ein Kunststoffmaterial und einen Härter. Der Härter ist derart ausgebildet, dass er bei Erreichen oder Überschreiten einer ersten Reaktionstemperatur (RT1) reagiert, um erste Quervernetzungen (Q1) in Längsketten (L) des Kunststoffmaterials zu erzeugen und bei Erreichen oder Überschreiten einer zweiten Reaktionstemperatur (RT2) reagiert, um zweite Quervernetzungen (Q2) zwischen Längsketten (L) des Kunststoffmaterials zu erzeugen. Das wenigstens eine teilgehärtete Bewehrungselement (10) wird durch Aushärten bei einer ersten Härtungstemperatur (HT1) des Imprägniermaterials (11) hergestellt, die mindestens so groß ist wie die erste Reaktionstemperatur (RT1) und kleiner ist als die zweite Reaktionstemperatur (RT2).

## Beschreibung

Die Erfindung betrifft die Herstellung von Bewehrungselementen für Baustoffkörper, beispielsweise Baustoffkörper aus Beton. Das Bewehrungselement besteht aus einem faserverstärkten Verbundwerkstoff.

Sogenannte Prepregs (englische Abkürzung für "preimpregnated fibers") sind bei Raumtemperatur plastisch verformbar. Sie können daher in die gewünschte Form gebracht und anschließend vollständig ausgehärtet werden. Problematisch ist es dabei, dass bei der Lagerung oder Formung zum endgültigen Bauteil insbesondere filigrane fadenförmige oder gitterförmige Prepregs die exakte gestreckte Ausrichtung der Verstärkungsfäden verlieren. Dadurch reduziert sich die Zugfestigkeit des Verbundwerkstoffs nach der endgültigen Vernetzung des Prepregs. Zudem muss gegebenenfalls durch Temperieren des Lagerorts sichergestellt werden, dass während der Lagerung keine fortgesetzte Aushärtung des Kunststoffmaterials stattfindet.

US 5 836 715 A beschreibt eine gitterförmige faserverstärkte Bewehrung, wobei die Verstärkungsfasern in ein Harz eingebettet sind, das duromere Eigenschaften hat. Um die Bewehrung in eine gewünschte Form bringen zu können, wird die duromere Matrix zunächst nur teilvernetzt und in einen B-Zustand (im englischen "B-stage" genannt) gebracht, indem es durch Erwärmung wieder verflüssigt werden kann.

WO 2020/079015 A1 beschreibt einen Verstärkungsstab aus faserverstärktem Verbundmaterial zur Verwendung in einem Baustoffkörper, beispielsweise Beton. Die Kunststoffmatrix besteht aus einem Thermoplast, dass sich durch Abkühlung und Wiedererwärmung beliebig oft zwischen dem schmelzflüssigen Zustand und dem festen Zustand verändern lässt, worin es sich von Duromeren unterscheidet. Dadurch besteht die Möglichkeit, das thermoplastische Matrixmaterial zum Umformen des Bewehrungsstabes zu erwärmen und wieder abzukühlen.

Allerdings erfüllen Thermoplaste häufig nicht die Anforderungen an eine Bewehrung eines Baustoffkörpers, beispielsweise in Bezug auf die Alkaliresistenz, die Wasseraufnahme, eine ausreichend lange Lebensdauer von bis zu 100 Jahren und mehr, Unempfindlichkeit gegen Eigenschaftsänderungen im Temperaturbereich von etwa -20°C bis etwa 110°C sowie geringe Herstellungskosten und ausreichend niedrige Bearbeitungs- und Umformtemperaturen. Viele Standard-Thermoplaste haben beispielsweise keine ausreichende Temperaturbeständigkeit für Temperaturen über 100°C oder weisen keine ausreichend guten mechanischen Eigenschaften auf. Die Thermoplaste einer anderen Gruppe (Konstruktionsthermoplaste) mit höheren Einsatztemperaturen sind häufig nicht ausreichend alkaliresistent oder quellen durch hohe Wasseraufnahme zu stark auf. Schließlich existieren auch Hochtemperatur-Thermoplaste für sehr hohe Einsatztemperaturen von bis zu 300°C, die allerdings sehr teuer und aufgrund von hohen Erweichungstemperaturen und hohen Viskositäten nur sehr schwer zu verarbeiten sind.

Um bei einem faserverstärkten Bewehrungselement die Fasern zu fixieren, aber dennoch ein Umformen zu ermöglichen, ist in US 9 387 605 B2 vorgeschlagen, die Kunststoffmatrix lediglich an einigen Stellen vollständig auszuhärten, so dass das Bewehrungselement an anderen Stellen umformbar bleibt. Der Herstellungsaufwand ist hierfür sehr groß und außerdem kann das Bewehrungselement nicht mehr beliebig an allen Stellen umgeformt werden, sondern nur noch dort, wo ein vollständiges Aushärten vermieden wurde.

Das Herstellen von faserverstärkten Verstärkungselementen durch ein Pultrusionsverfahren ist aus US 9 688 030 B2 und US 2021/0017766 A1 bekannt.

Ausgehend vom Stand der Technik ist es eine Aufgabe der vorliegenden Erfindung, ein Verfahren bereitzustellen, bei dem ein Bewehrungselement in einem stabilen aber noch umformbaren Zustand unter Aufrechterhaltung der durch Zugspannung im Verarbeitungsprozess erzeugten gestreckten Orientierung der Verstärkungsfasern einfach gelagert werden kann und bei Bedarf in den vollständig ausgehärteten Endzustand gebracht werden kann.

Diese Aufgabe wird durch ein Verfahren mit den Merkmalen des Patentanspruches 1 gelöst.

Das erfindungsgemäße Verfahren dient zur Herstellung wenigstens eines teilgehärteten Bewehrungselements, das beispielsweise ein teilgehärteter Bewehrungsstab sein kann. Zunächst wird wenigstens ein Verstärkungsfaserstrang aus Endlosfasern bereitgestellt. Die Verstärkungsfasern können Kunstfasern und/oder Naturfasern sein und beispielsweise eine oder mehrere der folgenden Faserarten aufweisen: Glasfasern, Kohlenstofffasern, Aramidfasern und Basaltfasern. Der wenigstens eine Verstärkungsfaserstrang kann auch als Bündel aus Verstärkungsfasern bzw. als Multifilament bezeichnet werden.

Der wenigstens eine Verstärkungsfaserstrang wird mit einem flüssigen Imprägniermaterial imprägniert. Das Imprägnieren kann beispielsweise durch Tränken des wenigstens einen Verstärkungsfaserstrangs in einem Bad erfolgen. Auch andere Imprägnierverfahren, wie beispielsweise Aufsprühen oder anderweitiges Aufbringen von Imprägniermaterial auf dem wenigstens einen Verstärkungsfaserstrang können auch angewandt werden.

Das Imprägniermaterial weist auf bzw. besteht aus einem Härter und einem Kunststoffmaterial. Der Härter stellt zwei voneinander verschiedene Reaktionstemperaturen bereit. Hierzu kann der Härter zwei unterschiedliche Härterkomponenten aufweisen und/oder als mehrstufiger Härter ausgebildet sein. Durch Erwärmen des Imprägniermaterials zumindest auf die erste Reaktionstemperatur werden in dem Kunststoffmaterial erste Quervernetzungen irreversibel hergestellt. Bei Erreichen einer zweiten Reaktionstemperatur, die höher ist als die erste Reaktionstemperatur, werden zusätzliche, zweite Quervernetzungen irreversibel hergestellt.

Die erste Reaktionstemperatur und die zweite Reaktionstemperatur sind Starttemperaturen, bei denen unterschiedliche Komponenten des Härters reagieren, und/oder der Härter hat Moleküle mit unterschiedlich reaktiven Enden, wobei die einen reaktiven Enden bei der ersten Reaktionstemperatur die erste Quervernetzung und die anderen reaktiven Enden bei der zweiten Reaktionstemperatur die zweite Quervernetzung der Moleküle des Kunststoffmaterials beginnen bzw. aufrechterhalten. Der Härter kann somit ein mehrstufiger Härter sein oder aus unterschiedlichen Härterkomponenten zusammengesetzt seien. Somit kann beispielsweise ein Komponente oder ein Teil des Härters bei Erreichen oder Überschreiten der ersten Reaktionstemperatur vollständig reagieren und die ersten Quervernetzungen bilden, während eine andere Komponente oder ein anderer Teil des Härters bei Erreichen oder Überschreiten der zweiten Reaktionstemperatur vollständig reagiert und die zweiten Quervernetzungen bildet.

Nach dem Imprägnieren des wenigstens einen Verstärkungsfaserstrangs wird dieser zur Herstellung des wenigstens einen teilgehärteten Bewehrungselements mit einer ersten Härtungstemperatur ausgehärtet. Die erste Härtungstemperatur ist mindestens so groß wie die erste Reaktionstemperatur, jedoch kleiner als die zweite Reaktionstemperatur. Somit werden lediglich die ersten Quervernetzungen im Imprägniermaterial bzw. Kunststoffmaterial hergestellt. Es findet sozusagen eine Teilvernetzung oder Teilpolymerisation statt. Einmal hergestellte erste Quervernetzungen sind nicht irreversibel auftrennbar und wiederherstellbar.

Der imprägnierte Verstärkungsfaserstrang wird zur Herstellung des teilgehärteten Bewehrungselements vorzugsweise vollständig und nicht lediglich abschnittsweise auf die erste Härtungstemperatur erwärmt. Die Dauer des Aushärtens des Imprägniermaterials bei der ersten Härtungstemperatur ist vorzugsweise ausreichend lang, dass ein im Wesentlichen vollständiges Bilden der ersten Quervernetzungen des Härters stattfindet, so dass insbesondere mindestens 90% oder mindestens 95% der möglichen ersten Quervernetzungen gebildet werden.

Im Kunststoffmaterial des teilgehärteten Bewehrungselements sind nur die ersten Quervernetzungen, aber noch nicht die zweiten Quervernetzungen hergestellt. Das teilgehärtete Bewehrungselement kann aufgrund der noch unvollständigen Vernetzung durch Temperierung erweichen und plastisch verformbar bzw. umgeformt werden. Bei Raumtemperatur ist das teilgehärtete Bewehrungselement stabil und nur elastisch verformbar. Durch Aufbringen einer äußeren Kraft, beispielsweise eines Biegemoments, kann das teilgehärtete Bewehrungselement elastisch verformt werden, beispielsweise gebogen, wobei es wieder in seinen Ursprungszustand zurückgeht, sobald die äußere Kraft nicht mehr einwirkt. Bei Raumtemperatur ist der teilgehärtete Bewehrungsstab insbesondere nicht biegeschlaff.

Als Raumtemperatur wird im vorliegenden Fall eine Temperatur verstanden, die im Bereich von 15°C bis 25°C und beispielsweise bei etwa 20°C liegt.

Die Glasübergangstemperatur des Imprägniermaterials des teilgehärteten Bewehrungselements ist größer als die Raumtemperatur und kann beispielsweise mindestens 30°C oder mindestens 35°C betragen. Das erfindungsgemäße Imprägniermaterial nutzt insbesondere die auftretenden Nebenvalenzkräfte, um zu gewährleisten, dass die Glasübergangstemperatur des teilgehärteten Bewehrungselements oberhalb der Raumtemperatur liegt.

Bevorzugt ist die Glasübergangstemperatur des Imprägniermaterials des teilgehärteten Bewehrungselements größer als die erste Reaktionstemperatur.

Bei einem Ausführungsbeispiel kann die erste Reaktionstemperatur mindestens 30°C oder mindestens 35°C betragen. Die Glasübergangstemperatur des Imprägniermaterials des teilgehärteten Bewehrungselements kann beispielsweise in einem Bereich von 30°C bis 65°C liegen.

Das flüssige Imprägniermaterial hat vorzugsweise eine Viskosität im Bereich von 400 mPa·s bis 1200 mPa·s.

Es ist bevorzugt, wenn die zweite Reaktionstemperatur mindestens um 50 bis 70 Kelvin größer ist als die Glasübergangstemperatur des Imprägniermaterials des teilgehärteten Bewehrungselements. Die zweite Reaktionstemperatur kann deutlich über der Glasübergangstemperatur des Imprägniermaterials des teilgehärteten Bewehrungselements liegen, z.B. im Bereich von 100°C bis 140°C.

Das Kunststoffmaterial des Imprägniermaterials ist vorzugsweise ein Duromer, beispielsweise ein Epoxidharz.

Es ist vorteilhaft, wenn während des Aushärtens des Imprägniermaterials zur Herstellung des wenigstens einen teilgehärteten Bewehrungselements bei der ersten Härtungstemperatur der Verstärkungsfaserstrang oder wenigstens einer der vorhandenen Verstärkungsfaserstränge durch das Aufbringen einer Zugkraft in eine gestreckte Position gebracht und in der gestreckten Position gehalten wird.

Das teilgehärtete Bewehrungselement oder wenigstens eines der vorhandenen teilgehärteten Bewehrungselemente werden vorzugsweise an wenigstens einer Umformstelle plastisch umgeformt, beispielsweise gebogen. Zum Umformen wird zumindest die Umformstelle des betreffenden teilgehärteten Bewehrungselements auf eine Umformtemperatur erwärmt. Die Umformtemperatur ist größer als die erste Reaktionstemperatur, jedoch kleiner als die zweite Reaktionstemperatur. Die Umformtemperatur liegt zudem über der Glasübergangstemperatur des Imprägniermaterials des teilgehärteten Bewehrungselements. Durch anschließendes Abkühlen unterhalb der Glasübergangstemperatur des Imprägniermaterials des teilgehärteten Bewehrungselements kann die wenigstens eine Umformstelle wieder in den teilvernetzten, stabilen Zustand gebracht werden, wobei die zweiten Quervernetzungen noch nicht hergestellt wurden. Das Umformen kann daher in mehreren Stufen bzw. mehrfach erfolgen.

Das Erwärmen auf die Umformtemperatur wird vorzugsweise lokal beschränkt auf die wenigstens eine Umformstelle. Alternativ hierzu könnte auch das gesamte teilgehärtete Bewehrungselement auf die Umformtemperatur erwärmt werden.

Die Umformtemperatur kann beispielsweise in einem Bereich von 70°C bis 90°C liegen.

Vorzugsweise wird das wenigstens eine teilgehärtete Bewehrungselement in der gewünschten umgeformten Gestalt durch eine Form oder eine andere Einrichtung gehalten, bis die Temperatur an der Umformstelle wieder unterhalb der Glasübergangstemperatur des Imprägniermaterials liegt, so dass die gewünschte Form erhalten bleibt.

Es ist dabei insbesondere vorteilhaft, wenn der Verstärkungsfaserstrang oder wenigstens einer der vorhandenen Verstärkungsfaserstränge während des Umformens an der wenigstens einer Umformstelle durch das Aufbringen einer Zugkraft in eine gestreckte Position gebracht in der gestreckten Position gehalten wird.

Das Erwärmen der wenigstens einen Biegestelle auf die Umformtemperatur wird vorzugsweise vor dem Umformvorgang ausgeführt. Das Umformwerkzeug kann unbeheizt sein, so dass während des Umformens keine Wärme auf das umzuformende teilgehärtete Bewehrungselement übertragen wird. Das Umformwerkzeug kann daher ohne Heizeinrichtung ausgebildet sein.

Nachdem das wenigstens eine Bewehrungselement optional umgeformt wurde oder bereits vor dem Umformen seine gewünschte Gestalt hat, kann es vollständig ausgehärtet werden. Hierzu wird das gesamte teilgehärtete Bewehrungselement auf eine zweite Härtungstemperatur erwärmt, die mindestens so groß ist wie die zweite Reaktionstemperatur des Härters. Dabei werden zusätzlich zu den bereits vorhandenen ersten Quervernetzungen weitere, zweite Quervernetzungen hergestellt. Einmal hergestellte zweite Quervernetzungen sind nicht irreversibel auftrennbar und wiederherstellbar.

Während des vollständigen Aushärtens und im Anschluss daran bis zu einer Abkühlung unter die Glasübergangstemperatur des Imprägniermaterials kann der Verstärkungsfaserstrang oder wenigstens einer der vorhandenen Verstärkungsfaserstränge durch eine Zugkraft in der gestreckten Position gehalten werden.

Durch das vollständige Aushärten wird aus dem wenigstens einen teilgehärteten Bewehrungselement ein Bewehrungskörperteil hergestellt. Das Bewehrungskörperteil ist nicht plastisch verformbar. In dem vollständig teilgehärteten Bewehrungskörperteil sind durch den Härter die ersten Quervernetzungen und die zweiten Quervernetzungen irreversibel hergestellt. Das vollständige Aushärten kann beispielsweise in einem Ofen stattfinden.

Die Dauer des Aushärtens des Imprägniermaterials bei der zweiten Härtungstemperatur ist vorzugsweise ausreichend lang, dass ein im Wesentlichen vollständiges Bilden der zweiten Quervernetzungen des Härters stattfindet, so dass insbesondere mindestens 90% oder mindestens 95% der möglichen zweiten Quervernetzungen gebildet werden.

Das Aushärten bei der ersten Härtungstemperatur und/oder bei der zweiten Härtungstemperatur kann jeweils bei Umgebungsdruck ausgeführt werden.

Das Bewehrungskörperteil bzw. das ausgehärtete Imprägniermaterial ist als Bewehrung in einem Baustoffkörper geeignet und insbesondere alkaliresistent und ausreichend stabil gegen eine Veränderung seiner Eigenschaften in einem Temperaturbereich von etwa -20°C bis etwa 110°C.

Es ist bevorzugt, wenn mehrere Verstärkungsfaserstränge vor dem Imprägnieren zu einem Verstärkungsfaserkörper verbunden werden, beispielsweise einem Gitter. Vor dem Aushärten bei der ersten Härtungstemperatur können die Verstärkungsfaserstränge an Verbindungsstellen zumindest provisorisch miteinander verbunden sein. Nach dem Aushärten mit der ersten Härtungstemperatur zur Herstellung des wenigstens einen teilgehärteten Bewehrungselements, das hier ein teilgehärtetes Bewehrungsgitter ist, wird die Verbindung durch das durch die ersten Quervernetzungen ausgehärtete Imprägniermaterial hergestellt und aufrecht erhalten.

Zusätzlich oder alternativ ist es auch möglich, mehrere teilgehärtete Bewehrungselemente zu einem Bewehrungskörper zu verbinden und/oder nach dem vollständigen Aushärten mehrere Bewehrungskörperteile zu einem Bewehrungskörper zu verbinden.

Bei einem Ausführungsbeispiel kann das Imprägniermaterial ein Epoxidharz aufweisen oder sein, insbesondere ein Amin härtendes Bisphenol A und/oder Bisphenol FEpoxidharz. Als Härter kann eine Kombination aus zwei oder mehr Härterkomponenten aus der folgenden Gruppe verwendet werden: Triacetondiamin, Isophorondiamin (3-Aminomethyl-3,5,5-trimethyl-cyclohexylamin) und 2-Ethyl-4-methylimidazol.

Vorteilhafte Ausgestaltungen der Erfindung ergeben sich aus den abhängigen Ansprüchen, der Beschreibung und den Zeichnungen. Nachfolgend werden bevorzugte Ausführungsbeispiele der Erfindung basierend auf den beigefügten Zeichnungen im Einzelnen erläutert. In den Zeichnungen zeigen:
Figur 1 eine stark schematisierte Seitenansicht eines Verstärkungsfaserstrangs,
Figur 2 einen Querschnitt durch den Verstärkungsfaserstrang aus Figur 1,
Figur 3 eine schematische Draufsicht auf einen Verstärkungsfaserkörper in Form eines Gitters,
Figur 4 eine blockschaltbildähnliche Darstellung eines Verfahrens sowie einer Vorrichtung zur Herstellung eines teilgehärteten Bewehrungselements aus wenigstens einem Verstärkungsfaserstrang bzw. aus einem Verstärkungsfaserkörper,
Figur 5 eine schematische Querschnittsdarstellung durch ein teilgehärtetes Bewehrungselement aufweisend ein teilweise ausgehärtetes Imprägniermaterial, in das Verstärkungsfasern eingebettet sind,
Figuren 6 bis 8 jeweils eine schematische blockschaltbildähnliche Darstellung von Verfahrensschritten zum Umformen eines teilgehärteten Bewehrungselements an einer Umformstelle,
Figur 9 eine blockschaltbildähnliche Darstellung eines Verfahrensschritts zum vollständigen Aushärten wenigstens eines optional umgeformten teilgehärteten Bewehrungselements zur Herstellung eines vollständigen teilgehärteten Bewehrungskörperteils,
Figur 10 eine schematische Darstellung der Quervernetzung eines Imprägniermaterials vor dem Aushärten,
Figur 11 eine schematische Darstellung der Quervernetzung eines Imprägniermaterials nach dem Aushärten bei einer ersten Härtungstemperatur (erste Quervernetzungen sind hergestellt) und vor dem Aushärten bei einer zweiten Härtungstemperatur, und
Figur 12 eine schematische Darstellung der Quervernetzung eines Imprägniermaterials nach dem Aushärten bei einer zweiten Härtungstemperatur (erste und zweite Quervernetzungen sind hergestellt).

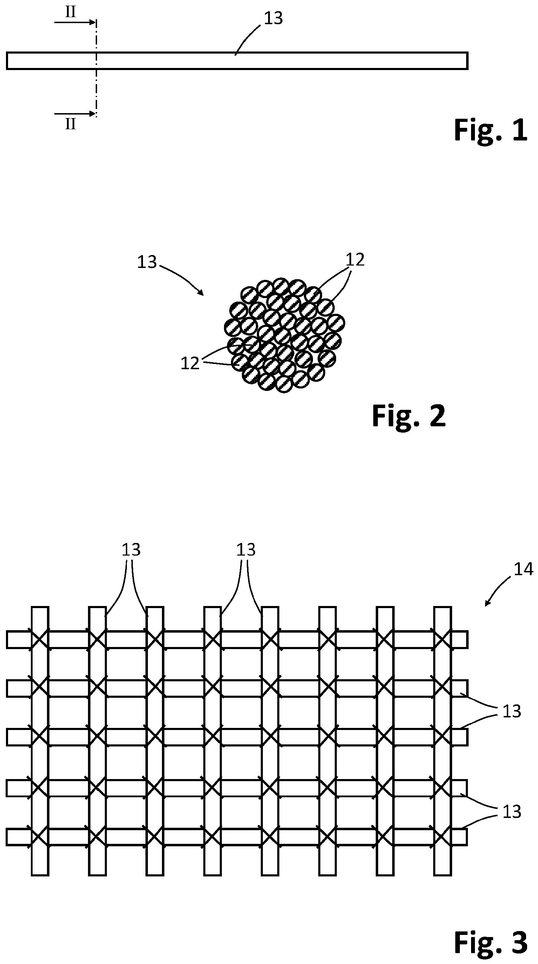

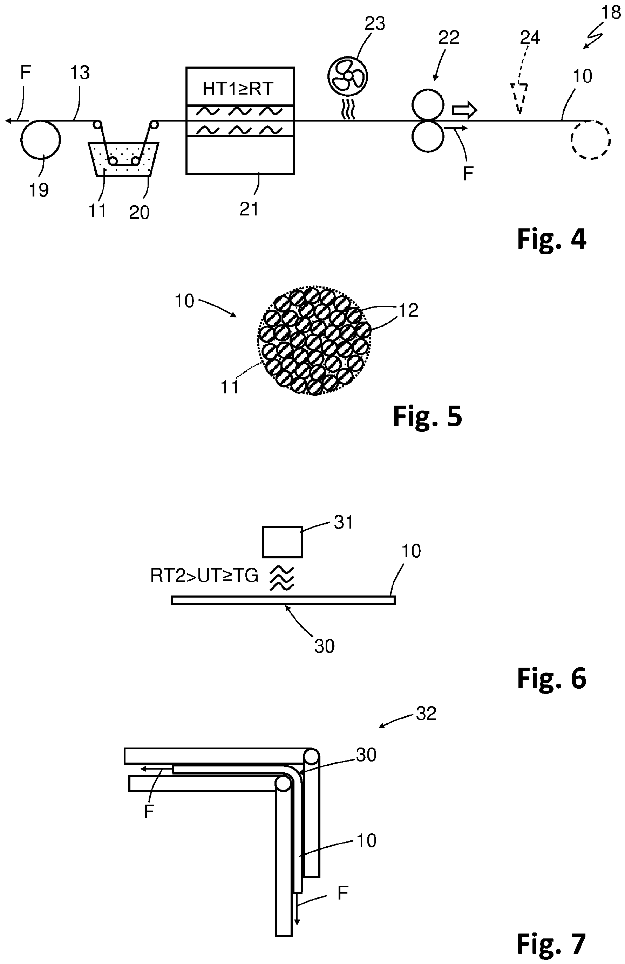

Die Erfindung betrifft ein Verfahren zur Herstellung wenigstens eines teilgehärteten Bewehrungselements 10. Das teilgehärtete Bewehrungselement 10 kann auch als Prepreg bezeichnet werden. Es weist in ein Imprägniermaterial 11 eingebettete Verstärkungsfasern 12 (Figur 5) eines Verstärkungsfaserstrangs 13 (Figuren 1 bis 3) auf. Die Verstärkungsfasern 12 des Verstärkungsfaserstrangs 13 (Figur 2) sind als lange Endlosfasern ausgebildet. Der Verstärkungsfaserstrang 13 kann daher auch als Multifilament oder als Bündel aus Verstärkungsfasern 12 bezeichnet werden. In dem Verstärkungsfaserstrang 13 erstrecken sich die Verstärkungsfasern 12 im Wesentlichen parallel zueinander in einer Erstreckungsrichtung. Die Erstreckungsrichtung kann geradlinig sein, so wie es bei den bevorzugten Ausführungsbeispielen in den Figuren 1 und 3 dargestellt ist. Durch die geradlinige Erstreckung können die Verstärkungsfasern 12 des Verstärkungsfaserstrangs 13 vor dem teilweisen oder vollständigen Aushärten des Imprägniermaterials 11 in eine gestreckte Lage gebracht werden. In Abwandlung hierzu kann die Erstreckungsrichtung des Verstärkungsfaserstrangs 13 und der Verstärkungsfasern auch gekrümmt sein, beispielsweise entlang eines Kreisbogens.

Zur Bildung eines stabförmigen teilgehärteten Bewehrungselements 10 kann ein einziger Verstärkungsfaserstrang 13 (Figur 1) verwendet werden. Es ist auch möglich, aus mehreren Verstärkungsfasersträngen 13 einen Verstärkungsfaserkörper 14, beispielsweise ein Gitter, zu bilden, wie es schematisch in Figur 3 gezeigt ist. Bei diesem Beispiel kreuzen sich zwei aufeinander gelegte Lagen aus jeweils mehreren Verstärkungsfasersträngen 13 im Wesentlichen rechtwinklig. Innerhalb einer gemeinsamen Lage erstrecken sich die Verstärkungsfaserstränge 13 beispielsgemäß parallel zueinander. Die Verstärkungsfaserstränge 13 des Verstärkungsfaserkörpers 14 erstrecken sich im Wesentlichen geradlinig. An den Kreuzungsstellen sind die sich kreuzenden Verstärkungsfaserstränge 13 zumindest provisorisch miteinander verbunden, um den gitterförmigen Verstärkungsfaserkörper 14 zu bilden. Jeder Verstärkungsfaserstrang 13 erstreckt sich vorzugsweise ausschließlich in einer einzigen Lage und ist insbesondere nicht mit Verstärkungsfasersträngen einer anderen Lage verflochten oder verwoben.

Die Anzahl der Lagen und die Ausrichtung der Verstärkungsfaserstränge 13 der zwei der mehr Lagen zueinander kann variieren, so dass auch gitterförmige Verstärkungsfaserkörper 14 mit anderen als rechteckförmigen Maschen gebildet werden können, z.B. rautenförmigen oder anderen polygonalen Maschen.

Zur Herstellung des wenigstens einen teilgehärteten Bewehrungselements 10 kann ein einzelner Verstärkungsfaserstrang 13 (Figur 1) oder ein Verstärkungsfaserkörper 14 (Figur 3) mit mehreren zumindest provisorisch miteinander verbundenen Verstärkungsfasersträngen 13 verwendet werden.

Anhand einer in Figur 4 in Form eines Blockschaltbilds dargestellten Herstellungsvorrichtung 18 kann wenigstens ein teilgehärtetes Bewehrungselement 10 hergestellt werden, beispielsweise aus einem einzelnen oder mehreren sich parallel erstreckenden Verstärkungsfasersträngen 13 oder auch aus einem Verstärkungsfaserkörper 14. Die Herstellungsvorrichtung 18 ist somit zur Durchführung des erfindungsgemäßen Verfahrens eingerichtet.

Wie es schematisch in Figur 4 veranschaulicht ist, wird der wenigstens eine Verstärkungsfaserstrang 13 bereitgestellt und kann beispielsweise von einer Vorratsrolle 19 abgewickelt werden. Im Anschluss daran wird der wenigstens eine Verstärkungsfaserstrang 13 mit dem Imprägniermaterial 11 imprägniert. Das Imprägniermaterial 11 wird flüssig auf den wenigstens einen Verstärkungsfaserstrang 13 aufgebracht, beispielsweise mittels eines Imprägnierbades 20, das das flüssige Imprägniermaterial 11 enthält. Der wenigstens eine Verstärkungsfaserstrang 13 wird somit getränkt. Optional kann im Bereich des Imprägnierbades 20 eine Einrichtung vorhanden sein, um überschüssiges Imprägniermaterial 11 aus dem bereits imprägnierten Verstärkungsfaserstrang 13 zu entfernen, beispielsweise herauszudrücken und/oder abzustreifen.

Bei einem abgewandelten Ausführungsbeispiel könnte anstelle eines Imprägnierbades 20 das flüssige Imprägniermaterial 11 auch durch Aufsprühen oder anderweitiges Auftragen auf den Verstärkungsfaserstrang 13 aufgebracht werden.

Die Viskosität des flüssigen Imprägniermaterials im Imprägnierbad 20 beträgt beispielsgemäß 400 mPa·s bis 1200 mPa·s.

Das Imprägniermaterial enthält Kunststoffmaterial und einen Härter und kann ausschließlich das Kunststoffmaterial und den Härter enthalten. Das Kunststoffmaterial ist ein Duromer, beispielsgemäß ein Epoxidharz. Das Epoxidharz kann ein Bisphenol basiertes Epoxidharz sein, beispielsweise basierend auf Bisphenol A und/oder Bisphenol F. Insbesondere handelt es sich um ein Amin härtendes Epoxidharz bzw. wenigstens ein Amin härtendes Bisphenol, auf dem das Epoxidharz basiert.

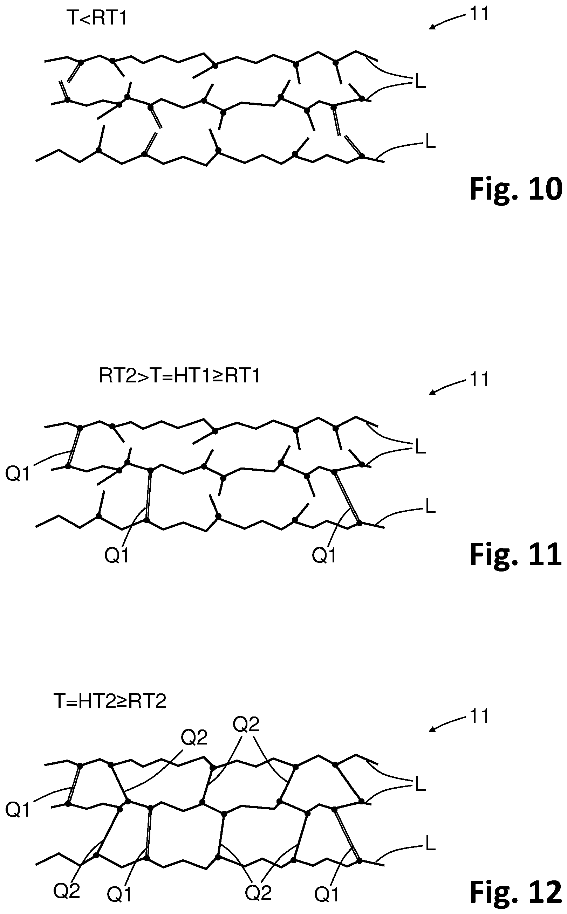

Der Härter weist beispielsgemäß wenigstens ein Amin zur Aushärtung des Kunststoffmaterials und beispielsgemäß des Epoxidharzes auf. Bei der vorliegenden Erfindung wird ein Härter verwendet, der einen mehrstufigen Härter oder ein Härter mit zwei oder mehr Härterkomponenten ist. In beiden Fällen ist der Härter dazu eingerichtet, bei Erreichen oder Überschreiten einer ersten Reaktionstemperatur RT1 zu reagieren und erste Quervernetzungen Q1 des Kunststoffmaterials zu bilden (Figur 11). Der Härter ist außerdem dazu eingerichtet, bei Erreichen oder Überschreiten einer zweiten Reaktionstemperatur RT2 zu reagieren und zweite Quervernetzungen Q2 des Kunststoffmaterials zu bilden (Figur 12). Zu diesem Zweck kann der Härter Komponenten enthalten, die bei unterschiedlichen Reaktionstemperaturen reagieren und dadurch die unterschiedlichen Quervernetzungen Q1, Q2 des Kunststoffmaterials bewirken. Zusätzlich oder alternativ kann der Härter Moleküle mit unterschiedlich reaktiven Enden aufweisen, derart, dass die einen reaktiven Enden bei der ersten Reaktionstemperatur die ersten Quervernetzungen Q1 bilden und andere reaktive Enden bei der zweiten Reaktionstemperatur die zweiten Quervernetzungen Q2 bilden.

Bei dem hier beschriebenen Ausführungsbeispiel weist der Härter zwei oder mehr der nachfolgend genannten Härterkomponenten auf: Triacetondiamin, Isophorondiamin (3-Aminomethyl-3,5,5-Trimethyl-Cyclohexylamin), 2-Ethyl-4-Methylimidazol.

Das Imprägniermaterial 11 des teilgehärteten Bewehrungselements 10 hat eine Glasübergangstemperatur TG, die größer als die Raumtemperatur und beispielsweise mindestens 30°C oder mindestens 35°C beträgt und bevorzugt in einem Temperaturbereich von 30°C bis 65°C liegen kann. Die erste Reaktionstemperatur RT1 ist vorzugsweise größer als die Raumtemperatur und kann beispielsweise mindestens 30°C oder mindestens 35°C betragen. Die Glasübergangstemperatur TG kann größer sein als die erste Reaktionstemperatur RT1.

Nach dem Imprägnieren wird der wenigstens eine Verstärkungsfaserstrang 13 bei einer ersten Härtungstemperatur HT1 ausgehärtet. Dieses Aushärten bei der ersten Härtungstemperatur HT1 findet nicht nur lokal statt, sondern das Imprägniermaterial 11 des gesamten imprägnierten Verstärkungsfaserstrangs 13 wird dieser Aushärtung unterzogen. Durch dieses Aushärten bei der ersten Härtungstemperatur HT1 wird das teilgehärtete Bewehrungselement 10 hergestellt.

Die erste Härtungstemperatur HT1 ist mindestens so groß wie die erste Reaktionstemperatur RT1, so dass bei diesem Aushärten die ersten Quervernetzungen Q1 des Kunststoffmaterials des Imprägniermaterials gebildet werden. Die erste Härtungstemperatur HT1 ist kleiner als die zweite Reaktionstemperatur RT2, so dass bei der Herstellung des wenigstens einen teilgehärteten Bewehrungselements 10 noch kein vollständiges Aushärten und somit keine zweiten Quervernetzungen Q2 durch den Härter gebildet werden (Figur 11) .

Das Erwärmen des imprägnierten Verstärkungsfaserstrangs 13 kann beispielsweise in einem Durchlaufofen 21 oder mittels einer anderen geeigneten Heizeinrichtung erfolgen. Wenn nicht nur ein oder mehrere parallele Verstärkungsfaserstränge 13 ausgehärtet werden sollen, sondern beispielsweise ein Verstärkungsfaserkörper 14 imprägniert und anschließend ausgehärtet werden soll, können zumindest einige der vorhandenen Verstärkungsfaserstränge 13 in einem gemeinsamen Spannrahmen angeordnet und gespannt werden. Bei dem gitterförmigen Verstärkungsfaserkörper 14 gemäß Figur 3 können beispielsweise die sich quer zur Förderrichtung durch den Durchlaufofen 21 erstreckenden Verstärkungsfaserstränge 13 in einem Spannrahmen gespannt sein, während die in Förderrichtung verlaufenden Verstärkungsfaserstränge 13 durch eine Fördereinrichtung 22 unter Zugspannung F gehalten und durch den Durchlaufofen 21 gefördert werden. Wesentlich ist, dass das Aushärten bei der ersten Härtungstemperatur HT1 in gestrecktem Zustand des wenigstens einen Verstärkungsfaserstrangs 13 stattfindet, so dass die später damit hergestellte Bewehrung für einen Baustoffkörper hohe Zugkräfte aufnehmen kann.

Nach dem Erwärmen des wenigstens einen imprägnierten Verstärkungsfaserstrangs 13 (beispielsweise im Durchlaufofen 21) wird der wenigstens eine Verstärkungsfaserstrang 13 wieder abgekühlt. Die Zugspannung F wird dabei aufrechterhalten. Das Abkühlen kann an der Umgebungsluft erfolgen oder optional durch eine aktive Kühleinrichtung 23 der Herstellungsvorrichtung 18 unterstützt werden. Beispielsweise kann die Kühleinrichtung 23 in Förderrichtung im Anschluss an den Durchlaufofen 21 angeordnet sein.

Das teilweise quervernetzte und abgekühlte Imprägniermaterial und die darin eingebetteten Verstärkungsfasern 12 bilden dann das wenigstens eine teilgehärtete Bewehrungselement 10. Ein einzelnes teilgehärtetes Bewehrungselement 10 kann stabförmig sein. Mehrere teilgehärtete Bewehrungselemente 10 können zu einem gitterförmigen Körper verbunden sein.

Die Herstellungsvorrichtung 18 kann optional eine Trennvorrichtung 24 aufweisen, um das wenigstens eine teilgehärtete Bewehrungselement 10 in eine gewünschte Länge und/oder gewünschte Breite zu trennen, beispielsweise zu schneiden. Das Trennen kann mechanisch mit Hilfe eines Messers und/oder mit Hilfe eines Wasserstrahls oder eines anderen geeigneten Trennverfahrens erfolgen. Das Trennen kann auch mit einem Laserstrahl erfolgen, wenn sichergestellt wird, dass das Aufwärmen zumindest in Abschnitten benachbart zu den Trennflächen nicht die zweite Härtungstemperatur HT2 überschreitet. Um ein zu starkes Erwärmen zu vermeiden, kann die Trennvorrichtung über eine Kühleinheit verfügen, um das wenigstens eine teilgehärtete Bewehrungselement 10 während des Trennens an der Trennstelle zu kühlen.

Das wenigstens eine teilgehärtete Bewehrungselement 10 ist bei Raumtemperatur elastisch biegbar oder bei Erwärmung über die Glasübergangstemperatur TG des Imprägniermaterials 11 des teilgehärteten Bewehrungselements 10 plastisch umformbar. Das Imprägniermaterial 11 ist nach dem Herstellen der ersten Quervernetzungen Q1 ausreichend fest, um die Verstärkungsfasern 12 bei Raumtemperatur im gestreckten und/oder unter Zugspannung gehaltenen Zustand zu fixieren. Das wenigstens eine teilgehärtete Bewehrungselement 10 kann bei Raumtemperatur gelagert werden. Ohne Erwärmung auf zumindest die zweite Reaktionstemperatur RT2 wird verhindert, dass sich die zweiten Quervernetzungen Q2 ausbilden, so dass das teilgehärtete Bewehrungselement 10 ausreichend umformbar bleibt. Die zweite Reaktionstemperatur RT2 ist ausreichend hoch, so dass sie auch bei ungünstigen Lagerbedingungen nicht versehentlich erreicht oder überschritten wird. Es besteht die Möglichkeit, einen stabförmigen oder gitterförmigen Körper aus einem oder mehreren teilgehärteten Bewehrungselementen 10 ohne hohe Kosten zu lagern und bei Bedarf an einer beliebigen Umformstelle umzuformen, beispielsweise zu biegen. Basierend auf dem wenigstens einen teilgehärteten Bewehrungselement kann ein Bewehrungskörper mit beliebiger zweidimensionaler oder dreidimensionaler Form geschaffen werden. Die Form kann dabei an die Anforderung und mithin die Gestalt des herzustellenden und zu bewehrenden Baustoffkörpers angepasst werden.

Ein Querschnitt durch ein teilgehärtetes Bewehrungselement 10 mit in das durch die ersten Quervernetzungen Q1 ausgehärtete Imprägniermaterial 11 ist schematisch in Figur 5 dargestellt.

Das wenigstens eine teilgehärtete Bewehrungselement 10, das beispielsweise ein stabförmiger Körper oder auch ein gitterförmiger Körper sein kann, kann optional an wenigstens einer Umformstelle umgeformt werden, wie es basierend auf den schematischen Darstellungen in den Figuren 6-8 veranschaulicht ist. Hierzu wird das wenigstens eine teilgehärtete Bewehrungselement 10 an der wenigstens einen Umformstelle 30 lokal auf eine Umformtemperatur UT erwärmt. Die Umformtemperatur UT ist zumindest so groß und vorzugsweise größer als die Glasübergangstemperatur TG des Imprägniermaterials 11 des teilgehärteten Bewehrungselements 10 und gleichzeitig kleiner als die zweite Reaktionstemperatur RT2.

Die Glasübergangstemperatur TG des Imprägniermaterials 11 des teilgehärteten Bewehrungselements 10 beträgt zumindest 30°C und kann beispielsweise in einem Bereich von 30°C bis 65°C liegen. Die zweite Reaktionstemperatur RT2 kann beispielsgemäß mindestens 100°C oder mindestens 120°C betragen und beispielsweise in einem Bereich von 100°C bis 140°C liegen. Die Umformtemperatur UT kann beispielsweise mindestens 70°C und beispielsweise höchstens 90°C betragen.

Für das lokale Erwärmen der wenigstens einen Umformstelle 30 kann eine Heizeinrichtung 31 verwendet werden (Figur 6).

Anschließend kann das wenigstens eine teilgehärtete Bewehrungselement 10 an der lokal erwärmten Umformstelle 30 umgeformt werden, beispielsweise gebogen werden. In Figur 7 ist lediglich stark schematisiert und beispielhaft eine Umformeinrichtung 32 zum Umformen des wenigstens einen teilgehärteten Bewehrungselements 10 veranschaulicht. Die Art und die Ausführung der Umformeinrichtung 32 kann variieren und davon abhängen, wie und an wie vielen Umformstellen 30 das wenigstens eine teilgehärtete Bewehrungselement 10 umgeformt werden soll.

Die Umformeinrichtung 32 ist beispielsgemäß nicht beheizt und nicht zum Beheizen eingerichtet. Das lokale Erwärmen der wenigstens einen Umformstelle 30 findet vorzugsweise vor dem Umformen mittels der Umformeinrichtung 32 durch eine separate Heizeinrichtung 31 statt (Figur 6). In Abwendung zu dem dargestellten Ausführungsbeispiel könnte alternativ das Aufwärmen der wenigstens einen lokalen Umformstelle 30 auf die Umformtemperatur UT auch innerhalb der Umformeinrichtung 32 ausgeführt werden.

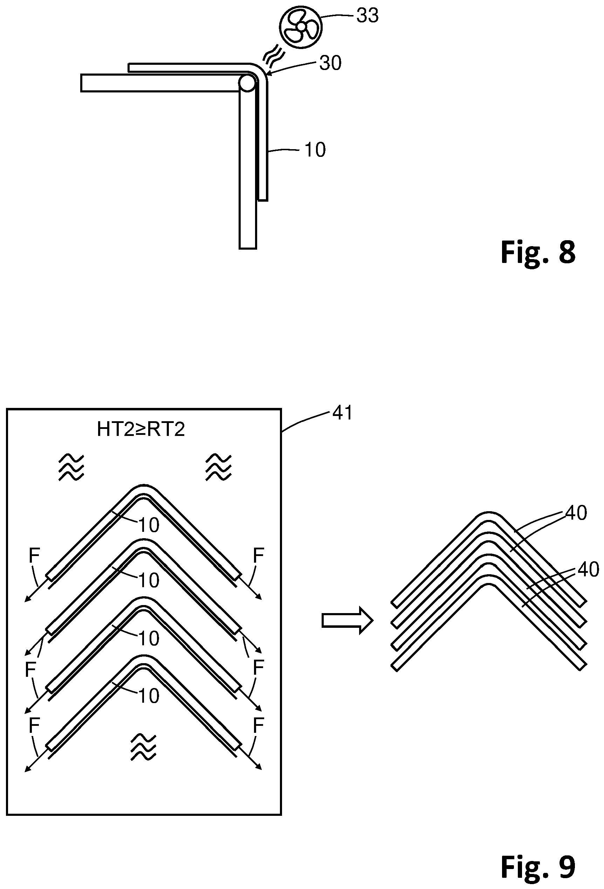

Nach dem Umformen wird die wenigstens eine Umformstelle 30 wieder gekühlt, so dass die Temperatur des wenigstens einen teilgehärteten Bewehrungselements 10 an der Umformstelle 30 unter die Glasübergangstemperatur TG des Imprägniermaterials 11 des teilgehärteten Bewehrungselements 10 sinkt, also beispielsweise auf unter 30°C. Das Abkühlen kann an der Umgebungsluft oder mit Hilfe einer optional vorhandenen weiteren Kühleinrichtung 33 durchgeführt werden (Figur 8). Während des Abkühlens unter die Glasübergangstemperatur TG kann das wenigstens eine umgeformte teilgehärtete Bewehrungselement 10 durch ein Formteil der Umformeinrichtung 32 oder eine andere geeignete Stützeinrichtung abgestützt werden, so dass die gewünschte Umformung erhalten bleibt und keine unerwünschte Formänderung auftritt.

Wenn das teilgehärteten Bewehrungselement 10 nur lokal erwärmt wird, bleibt die Zugspannung des wenigstens einen Verstärkungsfaserstrangs 13 durch die nicht erwärmten Abschnitte erhalten. Es ist daher nicht notwendig, aber optional möglich eine Zugkraft F auf den Verstärkungsfaserstrang 13 oder wenigstens einer der vorhandenen Verstärkungsfaserstränge 13 aufzubringen.

Bei einem abgewandelten Ausführungsbeispiel kann die Umformung (Fig. 7) auch mit einem beheizten Formwerkzeug durchgeführt werden, dass das gesamte Bewehrungselement 10 klemmt und auf die zweite Härtungstemperatur HT2 zur direkten vollständigen Vernetzung temperiert. In diesem Fall erfolgt die Abkühlung des kompletten Bewehrungselements 10 in Figur 8 im endvernetzten Zustand. Eine weitere Wärmebehandlung ist nicht mehr notwendig. Eine weitere Formgebung ist im endvernetzten Zustand nicht mehr möglich. Dabei wird der Verstärkungsfaserstrang 13 oder wenigstens einer der vorhandenen Verstärkungsfaserstränge 13 durch die Zugkraft F während und nach dem vollständigen Aushärten bis zu einer Abkühlung unter die Glasübergangstemperatur TG des Imprägniermaterials 11 in der gestreckten Position gehalten.

Abhängig davon, welche räumliche Gestalt die letztlich benötigte Bewehrung für einen Baustoffkörper aufweisen soll, kann ein Umformen mit den in den Figuren 6-8 schematisch dargestellten Umformschritten auch entfallen. Wenn beispielsweise lediglich ein gerader Bewehrungsstab oder ein ebenes Bewehrungsgitter benötigt wird, kann dieses ohne Umformen aus dem stabförmigen Körper oder gitterförmigen Körper hergestellt werden, der durch das wenigstens eine teilgehärtete Bewehrungselement 10 gebildet ist.

Aus dem wenigstens einen teilgehärteten Bewehrungselement 10, das optional umgeformt wurde, wird schließlich das Imprägniermaterial 11 bei einer zweiten Härtungstemperatur HT2, die mindestens so groß ist wie die zweite Reaktionstemperatur RT2, vollständig ausgehärtet. Bei diesem vollständigen Aushärten werden zusätzlich zu den bereits bestehenden ersten Quervernetzungen Q1 zweite Quervernetzungen Q2 des Kunststoffmaterials des Imprägniermaterials 11 erzeugt, die erst bei Erreichen oder Überschreiben der zweiten Reaktionstemperatur RT2 gebildet werden.

Durch das vollständige Aushärten bei der zweiten Härtungstemperatur HT2 werden aus den optional umgeformten teilgehärteten Bewehrungselementen 10 Bewehrungskörperteile 40 hergestellt. Das Aushärten bei der zweiten Härtungstemperatur HT2 kann in einem Ofen 41 erfolgen, wie es schematisch in Figur 9 gezeigt ist. Dabei können die Bewehrungselemente 10 auf einem Formwerkzeug fixiert werden. Nach dem vollständigen Aushärten, d.h. nach dem Bilden der zweiten Quervernetzungen Q2 des Kunststoffmaterials des Imprägniermaterials 11, werden die Bewehrungskörperteile 40 aus dem Ofen 41 entnommen und aktiv oder passiv gekühlt.

Während des vollständigen Aushärtens wird beispielsgemäß eine Zugkraft F auf die teilgehärteten Bewehrungselementen 10 ausgeübt, bis zur Abkühlung des Imprägniermaterials 11 unter dessen Glasübergangstemperatur des vollständig ausgehärteten Imprägniermaterials 11.

Die verschiedenen Stufen der Aushärtung sind in den Figuren 10-12 nochmals schematisch dargestellt. Wenn das Imprägniermaterial 11 noch keine Temperatur T erreicht hat, die zumindest der ersten Reaktionstemperatur RT1 entspricht, sind im Wesentlichen keine Quervernetzungen des Kunststoffmaterials des Imprägniermaterials 11 vorhanden (Figur 10). Das Imprägniermaterial hat eine niedrige Viskosität und ist flüssig. In diesem Zustand kann es auf den wenigstens einen Verstärkungsfaserstrang 13 aufgebracht werden.

Wenn das Imprägniermaterial erstmals auf eine Temperatur T erwärmt wird, die zumindest der ersten Reaktionstemperatur RT1 entspricht, bilden sich einige wenige erste Quervernetzungen Q1, die in Figur 11 lediglich schematisch durch einen Doppelstrich zwischen den Längsketten L des Kunststoffmaterials des Imprägniermaterials 11 veranschaulicht sind (Figur 11).

Wenn zum vollständigen Aushärten das Imprägniermaterial 11 erstmals auf eine Temperatur T oberhalb der zweiten Reaktionstemperatur RT2 erwärmt wird, bilden sich zusätzlich zu den ersten Quervernetzungen Q1 zweite Quervernetzungen Q2 (Figur 12). Nach dem Bilden der zweiten Quervernetzungen Q2 ist ein weiteres Umformen des erhaltenen Bewehrungskörperteils 40 nicht mehr möglich.

Das Herstellen der Quervernetzungen Q1, Q2 ist jeweils irreversibel. Das Aufrechterhalten der ersten Härtungstemperatur HT1 zur Bildung der ersten Quervernetzungen Q1 ist ausreichend lang, so dass ein im Wesentlichen vollständiges Reagieren zur Bildung der ersten Quervernetzungen Q1 erfolgt und zumindest 90% oder zumindest 95% aller möglichen ersten Quervernetzungen Q1 gebildet werden. Analog hierzu erfolgt das Aufrechterhalten der zweiten Härtungstemperatur HT2 ausreichend lang, so dass sich ein im Wesentlichen vollständiges Aushärten durch Bilden von zumindest 90% oder zumindest 95% aller möglichen zweiten Quervernetzungen Q2 einstellt.

Die zweite Härtungstemperatur HT2 kann beispielsweise mindestens 100°C oder mindestens 120°C betragen und vorzugsweise im Bereich von 100°C bis 140°C liegen.

Die Erfindung betrifft ein Verfahren zur Herstellung wenigstens eines teilgehärteten Bewehrungselements 10. Aus dem teilgehärteten Bewehrungselement 10 kann durch wenigstens einen weiteren Verfahrensschritt wenigstens ein vollständig ausgehärtetes Bewehrungskörperteil 40 hergestellt werden. Zur Herstellung des wenigstens einen teilgehärteten Bewehrungselements 10 wird ein Verstärkungsfaserstrang 13 bereitgestellt und mit einem Imprägniermaterial 11 imprägniert. Das Imprägniermaterial 11 enthält ein Kunststoffmaterial und einen Härter. Der Härter ist derart ausgebildet, dass er bei Erreichen oder Überschreiten einer ersten Reaktionstemperatur RT1 reagiert, um erste Quervernetzungen Q1 in Längsketten L des Kunststoffmaterials zu erzeugen und bei Erreichen oder Überschreiten einer zweiten Reaktionstemperatur RT2 reagiert, um zweite Quervernetzungen Q2 zwischen Längsketten L des Kunststoffmaterials zu erzeugen. Die zweite Reaktionstemperatur RT2 ist größer als die erste Reaktionstemperatur RT1 und/oder die Glasübergangstemperatur des Imprägniermaterials 11 des teilgehärteten Bewehrungselements 10. Das Kunststoffmaterial ist vorzugsweise ein Duromer, insbesondere ein Epoxidharz. Das Imprägniermaterial 11 hat nach der Bildung der ersten Quervernetzungen Q1 eine Glasübergangstemperatur TG, die oberhalb der Raumtemperatur liegt und beispielsweise mindestens 30°C oder mindestens 35°C beträgt. Das wenigstens eine teilgehärtete Bewehrungselement 10 wird durch Aushärten bei einer ersten Härtungstemperatur HT1 des Imprägniermaterials 11 hergestellt, die mindestens so groß ist wie die erste Reaktionstemperatur RT1 und kleiner ist als die zweite Reaktionstemperatur RT2.

### Bezugszeichenliste:

- 10: teilgehärtetes Bewehrungselement
- 11: Imprägniermaterial
- 12: Verstärkungsfaser
- 13: Verstärkungsfaserstrang
- 14: Verstärkungsfaserkörper

- 18: Herstellungsvorrichtung
- 19: Vorratsrolle
- 20: Imprägnierbad
- 21: Durchlaufofen
- 22: Fördereinrichtung
- 23: Kühleinrichtung
- 24: Trennvorrichtung

- 30: Umformstelle
- 31: Heizeinrichtung
- 32: Umformeinrichtung
- 33: weitere Kühleinrichtung

- 40: Bewehrungskörperteil
- 41: Ofen

- HT1: erste Härtungstemperatur
- HT2: zweite Härtungstemperatur
- L: Längskette
- Q1: erste Quervernetzung
- Q2: zweite Quervernetzung
- UT: Umformtemperatur
- RT1: erste Reaktionstemperatur
- RT2: zweite Reaktionstemperatur
- T: Temperatur
- TG: Glasübergangstemperatur

## Patentansprüche

1. Verfahren zur Herstellung wenigstens eines teilgehärteten Bewehrungselements (10) für Baustoffkörper, insbesondere Baustoffkörper aus Beton mit folgenden Schritten:
- Bereitstellen wenigstens eines Verstärkungsfaserstranges (13),
- Imprägnieren des wenigstens einen Verstärkungsfaserstranges (13) mit einem flüssigen Imprägniermaterial (11), das ein Kunststoffmaterial und einen Härter aufweist, wobei der Härter eine erste Reaktionstemperatur (RT1) und eine zweite Reaktionstemperatur (RT2) aufweist, wobei die zweite Reaktionstemperatur (RT2) größer ist als die erste Reaktionstemperatur (RT1),
- Aushärten des Imprägniermaterials (11) des wenigstens einen imprägnierten Verstärkungsfaserstranges (13) zur Herstellung wenigstens eines umformbaren, teilgehärteten Bewehrungselements (10) bei einer ersten Härtungstemperatur (HT1), die mindestens so groß ist wie die erste Reaktionstemperatur (RT1) und kleiner ist als die zweite Reaktionstemperatur (RT2) wobei das Imprägniermaterial des teilgehärteten Bewehrungselements (10) eine Glasübergangstemperatur (TG) hat, die größer ist als die Raumtemperatur.

2. Verfahren nach Anspruch 1, wobei das Imprägniermaterial des teilgehärteten Bewehrungselements (10) eine Glasübergangstemperatur (TG) hat, die mindestens 30°C oder mindestens 35°C beträgt.

3. Verfahren nach Anspruch 1 oder 2, wobei das Imprägniermaterial des teilgehärteten Bewehrungselements (10) eine Glasübergangstemperatur (TG) hat, die größer ist als die erste Reaktionstemperatur (RT1).

4. Verfahren nach Anspruch 2 oder 3, wobei die zweite Reaktionstemperatur (RT2) mindestens 50 bis 75 Kelvin größer ist als die Glasübergangstemperatur (TG) des Imprägniermaterials des teilgehärteten Bewehrungselements (10) .

5. Verfahren nach einem der vorhergehenden Ansprüche, wobei das Kunststoffmaterial ein Duromer ist.

6. Verfahren nach einem der vorhergehenden Ansprüche, wobei das Kunststoffmaterial ein Epoxidharz ist.

7. Verfahren nach einem der vorhergehenden Ansprüche, wobei das Aushärten zur Herstellung des wenigstens einen teilgehärteten Bewehrungselements (10) bei Umgebungsdruck erfolgt.

8. Verfahren nach einem der vorhergehenden Ansprüche, wobei das teilgehärtete Bewehrungselement (10) oder wenigstens eines der vorhandenen teilgehärteten Bewehrungselemente (10) an wenigstens einer Umformstelle (30) plastisch umgeformt wird, insbesondere plastisch gebogen wird, wobei das teilgehärtete Bewehrungselement (10) während des Umformens an der wenigstens einer Umformstelle (30) auf eine Umformtemperatur (UT) erwärmt wird, die größer ist als die Glasübergangstemperatur (TG) des Imprägniermaterials (11) des teilgehärteten Bewehrungselements (10) und kleiner ist als die zweite Reaktionstemperatur (RT2).

9. Verfahren nach Anspruch 8, wobei der Verstärkungsfaserstrang (13) oder wenigstens einer der vorhandenen Verstärkungsfaserstränge (13) während des Umformens an der wenigstens einen Umformstelle (30) durch das Aufbringen einer Zugkraft in eine gestreckte Position gebracht in der gestreckten Position gehalten wird..

10. Verfahren nach einem der vorhergehenden Ansprüche, wobei das wenigstens eine teilgehärtete Bewehrungselement (10) zur Herstellung wenigstens eines Bewehrungskörperteils (40) bei einer zweiten Härtungstemperatur (HT2) vollständig ausgehärtet wird, die mindestens so groß ist wie die zweite Reaktionstemperatur (T2).

11. Verfahren nach Anspruch 8 oder 9 und nach Anspruch 10, wobei das teilgehärtete Bewehrungselement (10) oder wenigstens eines der vorhandenen teilgehärteten Bewehrungselemente (10) zunächst umgeformt und nach dem Umformen auf eine Temperatur unterhalb der Glasübergangstemperatur (TG) des Imprägniermaterials (11) des teilgehärteten Bewehrungselements (10) abgekühlt wird.

12. Verfahren nach Anspruch 10 oder 11, wobei der Verstärkungsfaserstrang (13) oder wenigstens einer der vorhandenen Verstärkungsfaserstränge (13) durch die Zugkraft während und nach dem vollständigen Aushärten bis zu einer Abkühlung unter die Glasübergangstemperatur (TG) des Imprägniermaterials (11) des teilgehärteten Bewehrungselements (10) in der gestreckten Position gehalten wird.

13. Verfahren nach einem der Ansprüche 9 bis 12, wobei das vollständige Aushärten bei Umgebungsdruck erfolgt.

14. Verfahren nach einem der vorhergehenden Ansprüche, wobei der Härter ein mehrstufiger Härter oder ein Härter aus mehreren Komponenten ist

15. Verfahren nach einem der vorhergehenden Ansprüche, wobei mehrere Verstärkungsfaserstränge (13) vor dem Imprägnieren zu einem Verstärkungsfaserkörper (14) verbunden werden.

16. Verfahren nach einem der vorhergehenden Ansprüche, wobei mehrere teilgehärtete Bewehrungselemente (10) vor dem vollständigen Aushärten oder mehrere vollständig ausgehärtete Bewehrungskörperteile (40) zu einem Bewehrungskörper verbunden werden.

17. Verfahren nach einem der vorangegangenen Ansprüche, wobei während des Aushärtens des Imprägniermaterials (11) zur Herstellung des wenigstens einen teilgehärteten Bewehrungselements (10) bei der ersten Härtungstemperatur (HT1) der Verstärkungsfaserstrang (13) oder wenigstens einer der vorhandenen Verstärkungsfaserstränge (13) durch das Aufbringen einer Zugkraft in eine gestreckte Position gebracht und in der gestreckten Position gehalten wird.
